# EUROPÄISCHE PATENTSCHRIFT

(11) **EP 0 642 938 B1**
(45) Veröffentlichungstag und Bekanntmachung des Hinweises auf die Patenterteilung: **01.05.1996**
(21) Anmeldenummer: 94110353.3
(22) Anmeldetag: 04.07.1994
(51) Int. Cl.: B60G 3/26, B60G 15/06

(54) **Fahrzeug-Radaufhängung**
Vehicle wheel suspension
Suspension de roue pour véhicule

(30) Priorität: 15.09.1993 DE 4331366
(43) Veröffentlichungstag der Anmeldung: 15.03.1995
(73) Patentinhaber: Bayerische Motoren Werke Aktiengesellschaft, D-80788 München (DE)
(72) Erfinder: Matschinsky, Wolfgang Dr., D-80807 München (DE)

(56) Entgegenhaltungen:
- DE-A- 3 005 916
- DE-A- 3 219 685
- DE-A- 4 242 815

## Beschreibung

Die Erfindung bezieht sich auf eine Fahrzeug-Radaufhängung nach dem Oberbegriff des Patentanspruchs 1.

Eine bekannte derartige Radaufhängung (DE-A-30 05 916) strebt zum einen eine geringe Bauhöhe und einen reduzierten Raumbedarf im Fahrzeug-Vorderbau an. Die Zahl der Anlenkstellen am Fahrzeugaufbau und die Art der Krafteinleitung in den Fahrzeugaufbau sind dabei weitgehend die gleichen wie bei einer sogenannten Federbein-Achse, bei der das Teleskop-Federbein im unteren Bereich fest mit dem Radträger verbunden ist. Die Lenkdrehachse braucht dagegen oben nicht so stark zur Fahrzeugmitte hin geneigt zu werden wie bei den Federbein-Achsen.

Zum anderen wurde bei der bekannten Achse die Wirkungslinie der Tragfeder gegenüber der Stoßdämpfer-Mittelachse unter einem spitzen Winkel schräg abwärts und auswärts geneigt, um ein aus der Radlast resultierendes Kippmoment auf das Teleskop-Federbein zu vermindern. Dabei sind aber die Kippmoment-Anteile noch nicht eliminiert, die durch die Dämpferkräfte verursacht sind. Diese Kippmoment-Anteile können bei kurzen, schnellen Federungsbewegungen durchaus beträchtlich sein und ein komfortables, leichtes Ansprechen verhindern. Außerdem begünstigen sie einen vorzeitigen Verschleiß, insbesondere an der Kolbenstangenführung.

Der Erfindung liegt die Aufgabe zugrunde, eine Fahrzeug-Radaufhängung der eingangs genannten Art zu schaffen, bei der nicht nur das Kippmoment aus der Federkraft bzw. Radlast, sondern auch ein instationäres Kippmoment aus der Dämpferkraft kompensiert wird.

Diese Aufgabe wird erfindungsgemäß mit einer Fahrzeug-Radaufhängung mit den Merkmalen des Patentanspruches 1 gelöst. Damit kann in einfacher Weise die Wirkungslinie der Tragfeder und des Stoßdämpfers zusammenfallen und trotzdem nicht nur das von der Federkraft verursachte Kippmoment, sondern auch das von der Dämpferkraft über den Dreieckslenker auf den Dämpfer ausgeübte Kippmoment, das von der Einfederungsgeschwindigkeit, ggf. auch vom Einfederungsweg, abhängig ist, durch das Kippmoment ausgeglichen werden, das durch den nach innen versetzten Kraftangriffspunkt des Querlenkers am Stoßdämpfer entsteht.

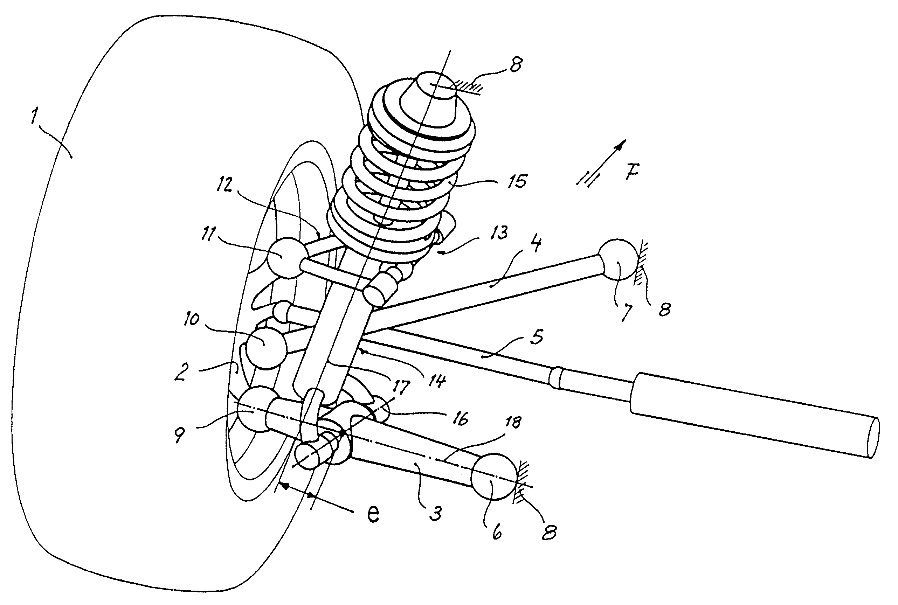

Die Erfindung und weitere vorteilhafte Einzelheiten der Erfindung sind im folgenden anhand eines in der Zeichnung dargestellten Ausführungsbeispiels näher erläutert. Die Zeichnung zeigt eine etwas schematisierte Ansicht von schräg oben innen auf die neue Radaufhängung.

Der das Rad 1 lagernde Radträger 2 ist in der Zeichnung nur angedeutet. Die Zeichnung zeigt eine Radaufhängung für ein lenkbares Rad, was aber für das erfindungsgemäße Prinzip nicht erforderlich ist. Der untere Querlenker ist hierbei in zwei einzelne stabförmige Lenker, nämlich einen weitgehend quer zur Fahrtrichtung F verlaufenden stabförmigen Querlenker 3 und in eine schräg nach vorne innen verlaufende Druckstrebe 4 aufgelöst. Die inneren Enden dieser Lenker sind über kardanische Bewegungen zulassende Gelenke 6 und 7 mit dem lediglich angedeuteten Fahrzeugaufbau 8 oder auch mit einem Hilfsrahmen bzw. Fahrschemel verbunden. Die äußeren Enden der genannten Lenker 3 und 4 greifen über Kugelgelenke 9 und 10 am Radträger 2 an, ebenso wie die seitlich verlagerbare Spurstange 5 zum Einleiten der Lenkbewegung. Die beiden stabförmigen Lenker 3 und 4 definieren mit ihren beiden äußeren Kugelgelenken 9 und 10 ein "ideelles Führungsgelenk". Der Dreieckslenker 12 ist an seinem zur Fahrzeugmitte hin gekehrten Bereich über ein ecksteifes Drehgelenk 13 mit etwa in Fahrzeuglängsrichtung verlaufender Drehachse mit dem Rohr eines Teleskop-Stoßdämpfers 14 verbunden. Das Rohr des Teleskop-Stoßdämpfers 14 stützt auch das untere Ende der zum Stoßdämpfer koaxialen Tragfeder 15 ab, die sich mit ihrem oberen Ende an dem lediglich angedeuteten Fahrzeugaufbau 8 über einen geeigneten Federteller gelenkig abstützt. Anstelle der als Schraubenfeder ausgebildeten Tragfeder 15 könnte auch eine andere, beispielsweise eine pneumatische oder hydropneumatische, Tragfeder vorgesehen werden.

Der Teleskop-Stoßdämpfer 14 ist an seinem unteren Endbereich etwa um eine längs verlaufende Drehachse 16 schwenkbar mit dem Querlenker 3 verbunden. Dabei ist die Drehachse 16 relativ zur Stoßdämpfer-Mittelachse 17 zur Fahrzeug-Mitte hin versetzt. Auf diese Weise erzeugt die von dem Stoßdämpfer 14 aus der Kraft der Tragfeder 15 und der Dämpferkraft zusammengesetzte Abstützkraft an dem unteren Ende des Stoßdämpfers 14 ein Biegemoment bzw. Kippmoment. Dieses Kippmoment wirkt in entgegengesetzter Richtung zu dem Kippmoment, das aus der Radlast über den Radträger 2 im wesentlichen um das Kugelgelenk 9 und über den Dreieckslenker 12 auf den Stoßdämpfer 14 ausgeübt wird.

Zusätzlich zu dem eben beschriebenen rein seitlichen Versatz e kann die Stoßdämpfer-Mittelachse 17 mit Bezug auf die Längsachse 18 des stabförmigen Querlenkers 3 auch in Fahrtrichtung F oder in entgegengesetzter Richtung versetzt sein. Hierdurch lassen sich auch Kippmomente ausgleichen oder zumindest zu einem großen Teil kompensieren, die entstehen, wenn in einer reinen Seitenansicht die Radaufstandskraft beispielsweise hinter oder vor dem Kugelgelenk 9 verläuft und über den Radträger 2 auch eine Längskraft-Komponente auf den Dreieckslenker 12 ausübt. Selbstverständlich sind dabei auch Kippmomentenanteile zu berücksichtigen, die aus der Kraft und der Richtung der Druckstrebe 4 bzw. der Spurstange 5 herrühren.

Mit der beschriebenen Radaufhängung ist es möglich, die auf das Teleskop-Federbein ausgeübten, das Ansprechen der Federung störenden und den Verschleiß erhöhenden Kippmomente bzw. Klemmkräfte auch dann völlig auszugleichen, wenn die radträgerseitigen Gelenke des Querlenkers, im beschriebenen Fall auch der Druckstrebe 4, relativ weit zur Fahrzeugmitte hin liegen. Eine solche Lage ist aber Voraussetzung, wenn beispielsweise eine große Bremsscheibe neben dem Felgentiefbett, d. h. außerhalb der Radmittelebene, vorgesehen werden soll.

## Patentansprüche

1. Fahrzeug-Radaufhängung mit einem das Rad (1) lagernden Radträger (2), der in seinem unteren Bereich über ein Gelenk (9) mit einem am Fahrzeugaufbau (8) oder dergleichen gelagerten Querlenker (3) und in seinem oberen Bereich über ein weiteres Gelenk (11) mit einem Dreieckslenker (12) verbunden ist, der an seinem inneren Bereich etwa um eine Längsachse schwenkbar an einem Teleskop-Federbein gelagert ist, das einen Stoßdämpfer (14) sowie eine diesen umgebende und sich an diesem abstützende Tragfeder (15) umfaßt, wobei der Stoßdämpfer (14) am unteren Ende etwa um eine längsverlaufende Drehachse (16) schwenkbar mit dem Querlenker (3) verbunden ist und sich mit dem oberen Ende am Fahrzeugaufbau (8) gelenkig abstützt,
dadurch gekennzeichnet, daß die Drehachse (16) zur Anlenkung des Stoßdämpfers (14) am Querlenker (3) relativ zur Stoßdämpfer-Mittelachse (17) zur Fahrzeug-Mitte hin versetzt ist.

2. Radaufhängung nach Anspruch 1, bei der der Querlenker in einen einzelnen, stabförmigen Querlenker (3) und in eine Zug- oder Druckstrebe (4) aufgelöst ist,
dadurch gekennzeichnet, daß die Anlenkung des Stoßdämpfers (14) an dem stabförmigen Querlenker (3) vorgesehen ist.

3. Radaufhängung nach Anspruch 2, dadurch gekennzeichnet, daß die Stoßdämpfer-Mittelachse (17) mit Bezug auf die Längsachse (18) des stabförmigen Querlenkers (3) in Fahrtrichtung (F) versetzt ist.

4. Radaufhängung nach Anspruch 1, dadurch gekennzeichnet, daß die Wirkungslinie der Tragfeder (15) und des Stoßdämpfers (14) zusammenfallen.

## Claims

1. A vehicle wheel suspension with a wheel support (2) bearing the wheel (1), which wheel support (2) is connected in its lower region via a joint (9) with a transverse arm (3) mounted on the vehicle structure (8) or the like and is connected in its upper region via a further joint (11) with a A-frame arm (12), which is mounted at its inner region for instance about a longitudinal axis in a swivellable manner on a telesopic suspension strut, which comprises a shock absorber (14) and a support spring (15) surrounding the latter and resting against it, in which the shock absorber (14) is connected in a swivellable manner with the transverse arm (3) at the lower end for instance about a rotation axis (16) running longitudinally and rests in an articulated manner with the upper end against the vehicle structure (8),
characterised in that the rotation axis (16) for articulating the shock absorber (14) on the transverse arm (3) is staggered relative to the central axis (17) of the shock absorber towards the centre of the vehicle.

2. A wheel suspension according to Claim 1, in which the transverse arm is broken down into an individual rod-shaped transverse arm (3) and into a tension or torque arm (4),
characterised in that the articulation of the shock absorber (14) is provided on the rod-shaped transverse arm (3).

3. A wheel suspension according to Claim 2, characterised in that the central axis (17) of the shock absorber is staggered in relation to the longitudinal axis (18) of the rod-shaped transverse arm (3) in the direction of travel (F).

4. A wheel suspension according to Claim 1, characterised in that the line of force of the support spring (15) and of the shock absorber (14) coincide.

## Revendications

1. Suspension de roue de véhicule dans laquelle :
- un porte-roue (2) sur lequel est montée la roue (1) est relié à sa partie inférieure par une articulation (9) à un bras transversal (3) monté sur le châssis (8) du véhicule ou partie analogue, et à sa partie supérieure par une autre articulation (11) à un triangle de suspension (12) qui, le long de sa partie interne est monté pivotant autour d'un axe longitudinal porté par une jambe élastique télescopique, comprenant un amortisseur (14) entouré par un ressort porteur (15) s'appuyant sur lui,
- l'amortisseur peut pivoter par son extrémité inférieure autour d'un axe longitudinal de rotation (16) fixé au bras transversal, tandis qu'il est en appui par son extrémité supérieure sur la structure du véhicule (8) cette suspension étant caractérisée en ce que l'axe de rotation (16) servant d'articulation à l'amortisseur (14) sur le bras transversal (3) est décalé, par rapport à l'axe médian de l'amortisseur par rapport au milieu du véhicule.

2. Suspension selon la revendication 1, dans laquelle le bras transversal est décomposé en un bras transversal individuel, en forme de barre (3) et en une barre de traction ou de poussée (4), caractérisée en ce que l'articulation de l'amortisseur (14) est prévue sur le bras transversal (3) en forme de barre.

3. Suspension selon la revendication 2, caractérisée en ce que l'axe médian (17) de l'amortisseur est décalé par rapport à l'axe longitudinal (18) du bras transversal (3) en forme de barre, dans la direction de déplacement (F) du véhicule.

4. Suspension selon la revendication 1, caractérisée en ce que les lignes d'action du ressort porteur (15) et de l'amortisseur (14) coïncident.
